# FASCICULE DE BREVET EUROPEEN

(11) **EP 0 864 491 B1**
(45) Date de publication et mention de la délivrance du brevet: **06.08.2003**
(21) Numéro de dépôt: 98400597.5
(22) Date de dépôt: 13.03.1998
(51) Int. Cl.: B64C 13/50, G05D 1/00

(54) **Procédé et dispositif de commande d'une gouverne d'inclinaison ou de profondeur d'un aéronef**
Verfahren und Vorrichtung zum Betrieb eines Höhenruders oder eines Neigungsruders eines Flugzeuges
Method and device for operating an elevator or a bank control surface of an aircraft

(30) Priorité: 14.03.1997 FR 9703100
(43) Date de publication de la demande: 16.09.1998
(73) Titulaire: AIRBUS France, 31060 Toulouse Cedex 03 (FR)
(72) Inventeur: Gautier, Jean-Pierre, 31000 Toulouse (FR); Ortega, Jean-Marc, 31700 Blagnac (FR)
(74) Mandataire: Poulin, Gérard

(56) Documents cités:
- EP-A- 0 763 465
- FR-A- 2 603 865
- FR-A- 2 683 502
- US-A- 4 244 277
- US-A- 4 472 780

## Description

### Domaine technique de l'invention

La présente invention concerne un procédé et un dispositif de commande d'une gouverne d'inclinaison ou de profondeur d'un aéronef.

Au sens de l'invention on entend par gouverne d'inclinaison une gouverne permettant de provoquer une rotation de l'aéronef autour de son axe de roulis. A titre d'exemple, pour un avion, la gouverne d'inclinaison peut être un aileron, une surface canard, des spoilers ou une gouverne de gauchissement.

Par ailleurs, on entend par gouverne de profondeur une gouverne permettant de provoquer une rotation de l'aéronef autour de son axe de tangage.

On note également qu'un élevon d'un aéronef est une gouverne considérée à la fois comme une gouverne de profondeur et d'inclinaison.

L'invention concerne plus précisément un dispositif de commande électrique destiné à des avions de transport qui satisfasse simultanément aux exigences de précision, de fiabilité et de légèreté existant pour ce type d'appareils.

### Etat de la technique antérieure

Le document (1) FR-A-2 604 685, décrit un dispositif de commande de gouverne de profondeur d'un avion, selon le préambule de la revendication 1. Ce dispositif est équipé de deux actionneurs électrohydrauliques avec une entrée électrique et d'un actionneur hydromécanique avec une entrée mécanique. Dans ce dispositif, chaque actionneur est alimenté par un circuit hydraulique qui lui est propre.

Les actionneurs électrohydrauliques reçoivent des ordres de commande électriques délivrés par des calculateurs qui leurs sont associés.

Par ailleurs, un seul des trois actionneurs est commandé à la fois pour manoeuvrer la gouverne. Selon une hiérarchie prédéterminée, en cas de défaillance du système de commande de l'un des actionneurs, le système de commande de l'actionneur de priorité suivante est déclenché. Le système de commande correspondant à l'actionneur hydromécanique présente la priorité de déclenchement la plus faible. Il constitue ainsi un secours mécanique en cas de panne électrique des autres systèmes de commande.

Avec un dispositif conforme au document (1), en cas de panne rendant l'utilisation d'un actionneur impossible, par exemple en cas de panne entraînant une chute de pression dans le circuit hydraulique alimentant l'actionneur électrohydraulique ou en cas de panne de l'actionneur lui-même ou de la commande de l'actionneur, la manoeuvre de la gouverne est effectuée soit avec l'actionneur électrohydraulique restant en état de fonctionner, soit éventuellement avec l'actionneur hydromécanique.

Toutefois, on peut noter qu'il n'est pas possible d'actionner simultanément la gouverne avec un actionneur hydromécanique et un actionneur électrohydraulique, sur des appareils équipés d'un dispositif de commande de la gouverne conforme au document (1). Ainsi, en cas de panne rendant inutilisable un actionneur à commande électrique, il n'est plus possible d'actionner simultanément les deux actionneurs restants. Il est donc nécessaire de dimensionner chaque actionneur pour l'effort maximal correspondant à des cas de manoeuvre.

Une telle mesure conduit à l'augmentation de la taille et par conséquent de la masse des actionneurs et des circuits hydrauliques correspondants.

Un but de la présente invention est donc de proposer un dispositif de commande de gouverne, qui soit d'une masse réduite par rapport au dispositif du document (1), et qui permette la manoeuvre de la gouverne même dans les cas les plus défavorables où la gouverne est soumise à des efforts importants.

Un autre but est de proposer un dispositif restant opérationnel même en cas de défaillance des systèmes électriques de contrôle des actionneurs.

Un autre but encore de l'invention est de proposer un dispositif de commande qui permette la manoeuvre de la gouverne avec une précision notablement accrue par rapport aux dispositifs à commande mécanique.

Un but de l'invention est enfin de proposer un procédé de commande perfectionné de gouverne de profondeur ou d'inclinaison qui satisfasse à des exigences de fiabilité et de sécurité sévères.

### Exposé de l'invention

Pour atteindre ces buts, l'invention a plus précisément pour objet un dispositif de commande de gouverne d'inclinaison ou de profondeur d'un aéronef comportant au moins deux actionneurs, chaque actionneur ayant au moins une entrée de commande électrique, et un système de pilotage électrique des actionneurs apte à occuper un premier état, dit de vol normal, dans lequel au moins l'un des actionneurs est piloté pour actionner la gouverne. L'invention selon la revendication 1 est caractérisée en ce qu'au moins l'un des actionneurs, dit actionneur mixte, comporte en outre une entrée de commande mécanique, et le système de pilotage électrique des actionneurs est apte à occuper un deuxième état, dit de manoeuvre, dans lequel au moins deux des actionneurs sont pilotés pour actionner simultanément la gouverne, et un troisième état, dit de panne de pilotage électrique, dans lequel l'actionneur mixte est piloté à partir de l'entrée de commande mécanique pour actionner la gouverne.

Au sens de la présente invention, on entend par état de vol normal un état d'absence de commande d'inclinaison ou de profondeur ou un état dans lequel les commandes d'inclinaison ou de profondeur correspondent à des mouvements de gouverne de très faible amplitude, pour des corrections normales de trajectoire.

Dans l'état de vol normal les gouvernes occupent une position de repos ou effectuent des mouvements dont le débattement est faible par rapport à leur position de repos.

L'état dit de manoeuvre est un état dans lequel l'aéronef effectue une manoeuvre telle que, par exemple, une accélération verticale, un virage ou une ressource lors de laquelle la ou les gouvernes en question subissent une charge importante. L'état de manoeuvre peut correspondre également à un état dans lequel l'aéronef n'effectue aucune des manoeuvres indiquées ci-dessus mais, par exemple, est soumis à des turbulences augmentant les efforts exercés sur les gouvernes.

Dans l'état de manoeuvre, les gouvernes effectuent généralement des mouvements dont le débattement par rapport à la position de repos est supérieur à celui des mouvements en état de vol normal.

Grâce à l'invention, un nombre plus important d'actionneurs est piloté pour actionner la gouverne de profondeur ou d'inclinaison dans l'état de manoeuvre.

Cette mesure permet d'augmenter la vitesse des manoeuvres de l'avion et permettre ainsi par exemple, d'éviter un obstacle.

Par ailleurs, cette mesure permet de réduire la taille des actionneurs.

En effet, en vol normal, un seul actionneur peut être suffisant pour maintenir la gouverne. En état de manoeuvre, le fait d'utiliser deux ou plus de deux actionneurs actifs simultanément permet de disposer d'une puissance de manoeuvre de la gouverne suffisante sans surdimensionnement des actionneurs.

On peut noter que dans le cas du dispositif du document (1), cette possibilité n'est pas offerte car il n'est pas possible, par exemple, d'activer simultanément l'actionneur à entrée mécanique et un ou deux actionneurs à entrée électrique.

La présente invention, dans le cas où trois actionneurs sont utilisés par gouverne, permet de réduire la taille des actionneurs par rapport à une solution correspondant au document (1). Dans le cas où seulement deux actionneurs sont utilisés par gouverne, le dispositif de l'invention permet des cas de manoeuvre semblables à ceux permis avec le dispositif du document (1), en utilisant un actionneur de moins.

L'état de panne de pilotage électrique est compris comme un état dans lequel le système de pilotage électrique n'élabore plus d'ordres de commande de vol en raison d'une ou plusieurs pannes électriques ou d'une ou plusieurs pannes de calculateurs, par exemple.

Dans l'état de panne de pilotage électrique, le dispositif de l'invention permet ainsi de disposer de la sécurité d'une commande mécanique.

Selon un aspect de l'invention, le système de pilotage électrique des actionneurs peut comprendre une unité de calcul associée respectivement à chaque actionneur.

Chaque unité de calcul peut être équipée d'un seul, mais préférentiellement d'une pluralité de calculateurs redondants. Ces calculateurs élaborent des ordres de pilotage, dirigés vers les actionneurs. Les calculateurs commandent aussi les modes de fonctionnement des actionneurs qui sont expliqués plus en détail dans la suite de la description.

Selon un autre aspect de l'invention, les actionneurs à entrée électrique peuvent respectivement comporter un vérin hydraulique avec deux chambres, et une servovalve reliée à un circuit hydraulique pour délivrer aux chambres un débit de fluide hydraulique fonction d'un ordre électrique en provenance de l'unité de calcul associée à l'actionneur.

Selon un aspect de l'invention, les actionneurs à entrée de commande électrique et dépourvus d'entrée de commande mécanique peuvent fonctionner selon deux modes.

Un premier mode est le mode dit "actif électrique". Une électrovanne de l'actionneur est excitée par un calculateur chargé du pilotage de l'actionneur et les chambres du vérin sont mises en communication avec la servovalve. Celle-ci délivre alors un débit de fluide hydraulique fonction des ordres électriques fournis par un calculateur du système électrique de pilotage.

Un deuxième mode est le mode dit amorti. Dans ce mode de fonctionnement, l'électrovanne est désexcitée par le calculateur chargé du pilotage et les chambres du vérin de l'actionneur sont mutuellement mis en communication à travers un restricteur. Ce restricteur freine le passage du fluide hydraulique d'une chambre du vérin à l'autre et permet ainsi d'amortir les mouvements de la gouverne. Il est possible de prévoir un mode amorti avec plusieurs degrés d'amortissement. Un amortissement léger permet de n'affecter que très faiblement les performances de l'actionnement de la gouverne, en cas de manoeuvre de l'aéronef. En cas de panne ou dans l'état de fonctionnement normal de l'aéronef, un amortissement plus important peut être envisagé pour les actionneurs qui ne participent pas à l'actionnement de la gouverne.

Selon un mode de mise en oeuvre de l'invention, le dispositif peut comporter trois actionneurs à entrée électrique dont au moins un actionneur mixte. Les actionneurs à entrée mixte peuvent également fonctionner selon les modes "actif" "électrique" et "amorti". Ils peuvent en outre fonctionner selon un mode "actif mécanique". Selon une première réalisation de l'actionneur à commande mixte, celui-ci comprend une première électrovanne pilotée par l'unité de calcul qui y est respectivement associée, la première électrovanne étant apte à occuper un état excité correspondant à un mode de fonctionnement dit "actif électrique" du vérin dans lequel les chambres du vérin sont mises en communication avec la servovalve, et un état désexcité. L'actionneur mixte comporte également une deuxième et une troisième électrovannes pilotées respectivement par les unités de calcul associées aux deux autres actionneurs du dispositif, et aptes à occuper alternativement un état excité et un état désexcité, les chambres du vérin de l'actionneur mixte étant mises en communication entre elles dans un mode de fonctionnement dit "amorti" du vérin lorsque la première électrovanne occupe un état désexcité et qu'au moins l'une des deuxième et troisième électrovannes occupe un état excité, et les chambres du vérin de l'actionneur mixte étant mises en communication avec un distributeur relié à l'entrée mécanique de l'actionneur dans un mode de fonctionnement dit "actif mécanique" lorsque les première, deuxième et troisième électrovannes occupent un état désexcité.

Lorsque les chambres du vérin sont en communication avec la servovalve, celle-ci leur délivre un débit de fluide hydraulique fonction d'ordres électriques de commande élaborés par le système électrique de pilotage et appliqués à la servovalve. De même, lorsque les chambres du vérin sont en communication avec le distributeur, celui-ci leur délivre un débit de fluide hydraulique fonction des ordres mécaniques appliqués sur l'entrée de commande mécanique.

Selon une autre réalisation de l'actionneur mixte, celui-ci peut aussi comporter une première, une deuxième et une troisième électrovannes pilotées respectivement par une unité de calcul associée audit actionneur mixte et par les unités de calcul associées aux deux autres actionneurs du dispositif, aptes à occuper chacune alternativement un état excité et un état désexcité, l'actionneur fonctionnant selon un mode dit "amorti", dans laquelle les chambres du vérin sont mises en communication, lorsqu'au moins l'une des deuxième et troisième électrovanne est dans un état excité ; l'actionneur fonctionnant selon un mode dit "actif électrique" dans lequel les chambres du vérin sont mises en communication avec la servovalve, et dans lequel celle-ci est pilotée par l'intermédiaire de l'entrée de commande électrique, lorsque la première électrovanne est excitée et que les deuxième et troisième électrovannes sont désexcitées, et l'actionneur fonctionnant selon un mode dit "actif mécanique" dans lequel les chambres du vérin sont mises en communication avec la servovalve et dans lequel l'actionneur est pilotée par l'intermédiaire de l'entrée de commande mécanique, lorsque les première, deuxième et troisième électrovannes sont dans un état désexcité.

Selon un mode de réalisation particulier à deux actionneurs, l'un des actionneurs de type hydrostatique à entrée de commande électrique peut être un actionneur de type EHA (Electro-Hydrostatic Actuator) à alimentation électrique.

Un tel actionneur comporte un circuit hydraulique intégré qui lui est propre et pressurisé par une électropompe interne alimentée en courant électrique.

Par ailleurs, le dispositif peut comporter au moins un actionneur de type EBHA (Electrical Back-up Hydraulic Actuator) avec deux entrées de commande électrique, ledit actionneur présentant une première entrée de commande électrique pour piloter une servovalve et une deuxième entrée de commande électrique pour piloter un système de génération hydraulique intégré et autonome.

Le système de génération hydraulique intégrée à l'actionneur dans le cas d'actionneurs de type EHA ou EBHA peut délivrer un débit variable de fluide hydraulique dans les chambres du vérin, en fonction d'ordres électriques de commande élaborés par le système de pilotage, de façon à manoeuvrer la gouverne.

Un tel système de génération hydraulique équipe les actionneurs de type hydrostatique. Il permet d'affranchir le fonctionnement de l'actionneur de celui des circuits hydrauliques de l'avion.

En effet, la perte de pression sur un circuit hydraulique rend l'actionneur correspondant inopérant. Les actionneurs de type hydrostatique (EHA) et les actionneurs à deux entrées électriques dont l'une pilote un système de génération hydraulique autonome (EBHA), restent donc en état de fonctionner même en cas de panne du circuit hydraulique.

Un dispositif conforme à l'invention peut comporter des actionneurs au nombre de deux, trois ou plus.

Selon un autre mode de réalisation, le dispositif de l'invention peut comporter deux actionneurs avec une entrée de commande électrique et un actionneur mixte avec une entrée de commande électrique et une entrée de commande mécanique.

L'invention concerne également un procédé de pilotage d'un dispositif de commande de gouverne d'inclinaison ou de profondeur d'un aéronef comprenant un actionneur avec une entrée de commande électrique et un actionneur mixte avec une entrée de commande électrique et une entrée de commande mécanique. Ce procédé est caractérisé en ce que :
- on pilote électriquement l'un des actionneurs dans un état dit de vol normal,
- on pilote électriquement et simultanément au moins deux actionneurs dans un état dit de manoeuvre, et
- on pilote mécaniquement l'actionneur mixte dans un état de panne du système de pilotage électrique des actionneurs selon la revendication 14.

D'autres caractéristiques et avantages de la présente invention ressortiront mieux de la description qui va suivre, en référence aux dessins annexés, donnée à titre purement illustratif et non limitatif.

### Brève description des figures

- la figure 1 est une représentation schématique simplifiée d'un dispositif de commande de gouverne conforme à un premier mode de mise en oeuvre de l'invention,
- la figure 2 est une représentation schématique simplifiée d'un actionneur à entrée de commande électrique pouvant équiper le dispositif de la figure 1.
- la figure 3 est une représentation schématique simplifiée d'un actionneur mixte pouvant équiper le dispositif de la figure 1,
- la figure 4 est une représentation schématique simplifiée d'un autre type de actionneur mixte pouvant équiper le dispositif de la figure 1.
- la figure 5 est une représentation schématique simplifiée d'un dispositif de commande de gouverne conforme à un deuxième mode de mise en oeuvre de l'invention ;
- la figure 6 est une représentation schématique simplifiée d'un dispositif de commande de gouverne conforme à un troisième mode de mise en oeuvre de l'invention.

### Description de modes de mise en oeuvre de l'invention

Dans la description qui suit, des éléments identiques ou similaires des différentes figures portent les mêmes référence afin d'en faciliter la compréhension.

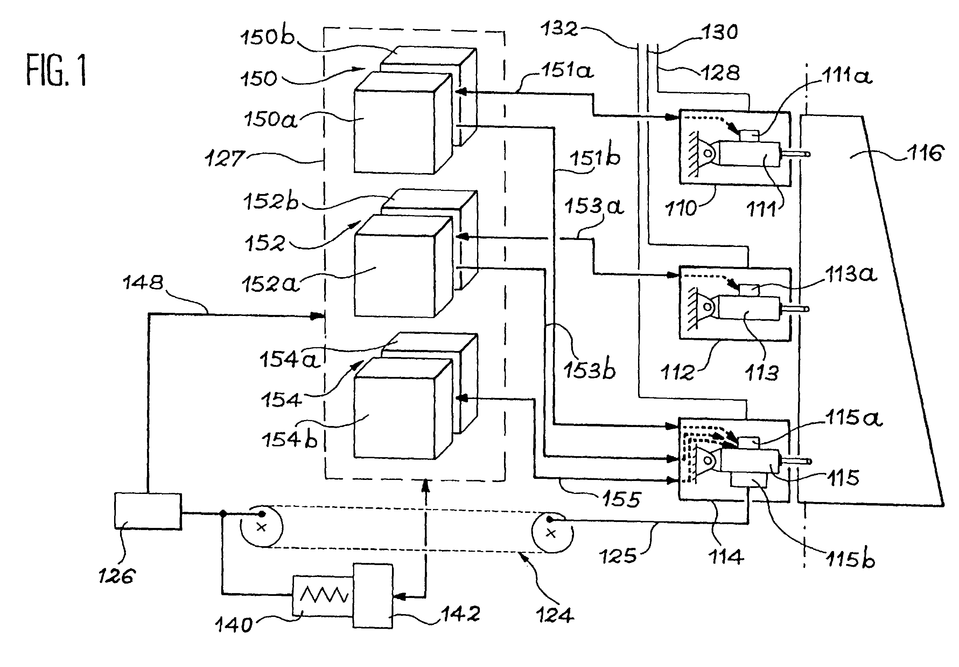

La figure 1 montre de façon simplifiée une première réalisation du dispositif de commande de gouverne selon l'invention.

Le dispositif comporte trois actionneurs 110, 112 et 114 équipés de vérins 111, 113 et 115 pour manoeuvrer une gouverne d'inclinaison ou de profondeur 116. Les actionneurs 110 et 112 sont des actionneurs avec des entrées de commande électriques 111a et 113a et l'actionneur 114 est un actionneur mixte présentant une entrée de commande électrique 115a et une entrée de commande mécanique 115b. Les actionneurs sont du type "simple corps", c'est-à-dire que chaque actionneur est relié à un unique circuit hydraulique et ne comporte qu'un seul vérin.

Le vérin de chacun des actionneurs est alimenté par un circuit hydraulique différent. Les circuits hydrauliques des vérins 111, 113 et 115 sont partiellement représentés et portent respectivement les références 128, 130 et 132.

Les circuits hydrauliques sont équipés de pompes de pressurisation (non représentées) qui sont entraînées ou alimentées en énergie respectivement par un ou plusieurs propulseurs différents de l'aéronef.

A titre de variante, un ou plusieurs actionneurs peuvent comporter un circuit hydraulique interne qui leur est propre et qui est mis sous pression par une électropompe interne. Dans ce cas, l'alimentation en énergie des actionneurs est électrique et les circuits hydrauliques 128, 130 et 132 sont remplacés par des circuits d'alimentation électrique.

Un système de pilotage électrique des actionneurs avec la référence générale 127 comporte trois unités de calcul 150, 152 et 154 pour piloter respectivement les actionneurs 110, 112 et 114. Chaque unité de calcul peut comporter un calculateur ou une pluralité de calculateurs redondants, respectivement 150a, 150b, 152a, 152b, 154a, 154b, fonctionnant en parallèle pour augmenter la fiabilité des unités de calcul.

Les unités de calcul 150, 152 et 154 sont respectivement reliées aux actionneurs par des liaisons électriques 151a, 153a et 155, représentées de façon simplifiée, en particulier pour transmettre des signaux de commande sur les entrées de commande électriques 111a, 113a et 115a. Ces signaux de commande intègrent les ordres correspondant à la position d'un organe de commande de pilotage 126 tel qu'un manche ou un volant installé au poste de pilotage.

Des liaisons électriques 151a, 151b, 153a, 153b et 155 transmettent des signaux pilotant un mode de fonctionnement des actionneurs.

La position des organes de pilotage 126 détectée par des capteurs de position, est transmise électriquement au système 127 par une liaison électrique 148.

Un système de timonerie mécanique 124 permet, par ailleurs, par l'intermédiaire d'une transmission débrayable 125, d'appliquer directement les commandes exercées sur l'organe de pilotage à l'entrée de commande mécanique 115b de l'actionneur 115.

Un dispositif de sensation artificielle d'efforts 140 et un actionneur 142 de réglage du zéro d'effort piloté par l'intermédiaire du système de pilotage électrique 127, sont également prévus pour restituer sur l'organe de pilotage un effort fonction de la commande exécutée.

En cas de vol normal, les ordres de commande sont transmis électriquement à l'un des actionneurs. L'unité de calcul 150 par exemple, fournit les ordres de commande à l'actionneur 110. En cas de manoeuvre, deux (ou trois) actionneurs sont actionnés simultanément.

On peut noter que, en cas de manoeuvre, lorsqu'une panne ou autre avarie entraîne une perte de pression hydraulique dans le circuit hydraulique de l'un des actionneurs, par exemple l'actionneur 110, l'actionnement de la gouverne est assuré par les deux actionneurs 112, 114 dont le circuit hydraulique n'est pas pressurisée à partir du circuit en panne.

De la même façon, dans l'état dit de vol normal, une panne entraînant la déficience d'un des actionneurs provoque le pilotage d'un autre actionneur susceptible de fonctionner.

Selon une variante du dispositif de la figure 1, l'un des actionneurs à entrée électrique 110, 112, par exemple l'actionneur 112 peut être remplacée par un actionneur de type hydrostatique dite "EHA" (Electro Hydrostatic Actuator), comportant un système de génération hydraulique intégré et autonome. Le circuit hydraulique extérieur 130 est alors éliminé et il en résulte un allégement du dispositif.

En cas de panne entraînant une chute de pression de l'un des circuits hydrauliques 128 ou 132, il reste l'un des actionneurs à circuit hydraulique extérieur 110 ou 114 et l'actionneur 112 (EHA) autonome, pour actionner la gouverne.

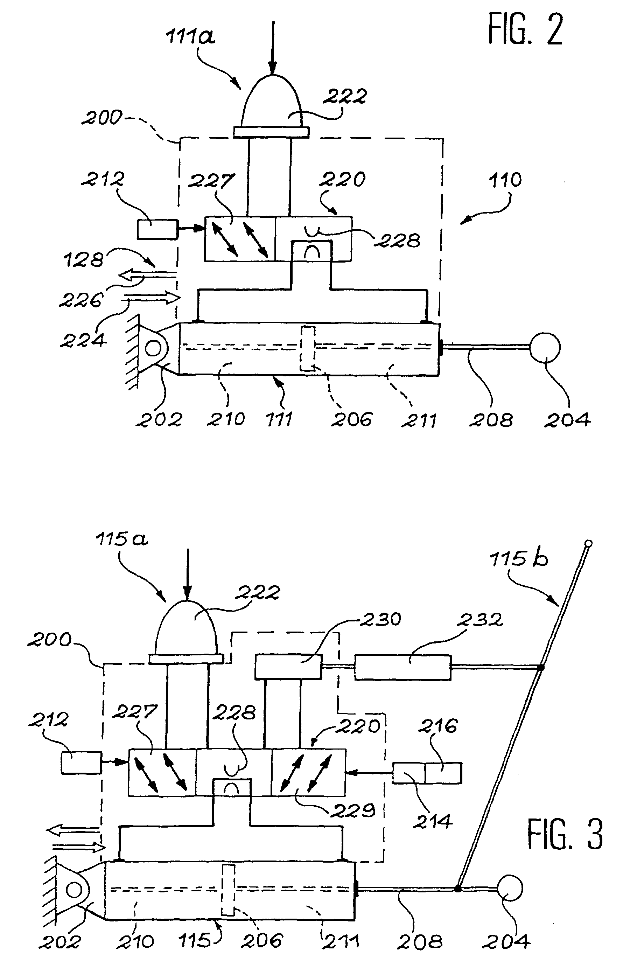

La figure 2 montre de façon schématique les principaux éléments composant un actionneur à entrée de commande électrique, encore appelé actionneur électrohydraulique.

L'actionneur repéré avec la référence générale 110 comporte un vérin 111 et un bloc de commande 200 avec une entrée électrique de commande 111a.

Le vérin 111 présente une extrémité 202 reliée à un support fixe et une extrémité 204 reliée à une gouverne d'inclinaison ou de profondeur, non représentée. Un piston 206, solidaire d'une tige de piston 208 sépare le cylindre du vérin en deux chambres 210, 211.

Une électrovanne 212 reliée électriquement à une unité de calcul, non représentée, associée à l'actionneur, permet de sélectionner un mode de fonctionnement de l'actionneur.

Lorsque l'électrovanne est excitée par un signal électrique, un tiroir 220 dit "tiroir de mode" est positionné de manière à mettre en communication les chambres 210 et 211 avec une servovalve 222, par l'intermédiaire d'une portion de double passage 227 du tiroir.

La servovalve 222, reliée électriquement à l'unité de calcul, délivre alors au vérin 111 un débit de fluide hydraulique en fonction des ordres élaborés par l'unité de calcul. L'actionneur fonctionne alors dans le mode actif électrique déjà décrit. Le débit de fluide hydraulique est fourni par un circuit hydraulique 128 dont ne sont représentés qu'une arrivée 224 de haute pression et un départ 226 de basse pression.

Lorsque l'électrovanne 212 est désexcitée, en l'absence de signal électrique, le tiroir de mode 220 est positionné de façon à isoler les chambres du vérin de la servovalve 222 et à mettre en communication les chambres 210 et 211 entre-elles, à travers un restricteur 228. Cette position, illustrée sur la figure 2 correspond au fonctionnement de l'actionneur selon le mode amorti déjà décrit.

La figure 3 montre de façon schématique un actionneur mixte, tel que l'actionneur 114 utilisé dans le dispositif de commande illustré à la figure 1. De nombreux éléments, sont identiques à ceux de l'actionneur de la figure 2. Ces éléments portent les mêmes références et on peut donc se reporter à leur sujet, aux explications qui précèdent. Par ailleurs, sur la figure 3, le vérin de l'actionneur porte, par analogie avec la figure 1, la référence 115 et les entrées de commande électrique et mécanique portent respectivement les références 115a et 115b.

Le tiroir de mode 220 de l'actionneur mixte peut occuper trois positions et est actionné par trois électrovannes 212, 214 et 216 pilotées respectivement par les unités de calcul 154, 152 et 150 visibles à la figure 1.

Lorsque l'électrovanne 212 est excitée, le tiroir 220 occupe une position dans laquelle les chambres 210, 211 sont mises en communication avec la servovalve 222 par l'intermédiaire d'une portion de double passage 227 du tiroir. L'actionneur fonctionne alors selon le mode actif électrique déjà décrit.

Lorsque l'électrovanne 212 est désexcitée et que l'une au moins des électrovannes 214 et 216 est excitée, le tiroir de mode occupe une position dans laquelle les chambres 210 et 211 sont mises en communication à travers un restricteur 228 pour un fonctionnement selon le mode amorti. Cette position correspond à la position du tiroir représentée sur la figure 3.

Lorsque aucune des électrovannes 212, 214 et 216 n'est excitée, le tiroir de mode occupe une troisième position dans laquelle les chambres 210 et 211 sont mises en communication avec un distributeur 230 par l'intermédiaire d'une portion de double passage 229 du tiroir. Dans cette position, un embrayage 232 est embrayé et relie le distributeur 230 à l'entrée de commande mécanique 115b.

Le distributeur 230 délivre alors au vérin un débit de fluide hydraulique fonction de la commande mécanique appliquée sur l'entrée 115b. L'actionneur fonctionne selon le mode actif mécanique. Ce mode est enclenché par défaut en cas de panne de pilotage électrique, c'est-à-dire quand aucune des électrovannes ne reçoit de signal d'une unité de calcul.

A titre d'exemple et dans l'état de vol normal, en se reportant à la figure 1 on comprend qu'en cas de panne de la première chaîne électrique 150, 150a, 150b, 151a, 151b, associée à l'actionneur 110, l'électrovanne 216 est désexcitée. La deuxième chaîne électrique 152, 152a, 152b, 153a, 153b associée à l'actionneur 112 est alors activé pour piloter l'actionneur 112.

En cas de panne électrique de cette deuxième chaîne, l'électrovanne 214 est également désexcitée. La troisième chaîne électrique comportant les éléments 154, 154a, 154b, 155 est alors activée pour piloter l'actionneur 114.

Enfin, en cas de panne électrique des trois chaînes, les trois électrovannes 212, 214 et 216 sont désexcitées et la commande mécanique de l'actionneur mixte est automatiquement activée.

En cas de fonctionnement normal du dispositif de commande de gouverne, l'embrayage 232 est débrayé. Ceci permet d'éviter que les ordres tels que les ordres de stabilisation délivrés par les calculateurs ne soient mécaniquement retransmis sur l'organe de pilotage. Selon une variante de réalisation, pour éviter que les ordres ne soient retransmis sur les organes de pilotage, il est possible aussi d'équiper l'entrée de commande mécanique d'un système de bielle à ressort, ou à came, capable d'absorber toute la course de l'actionneur.

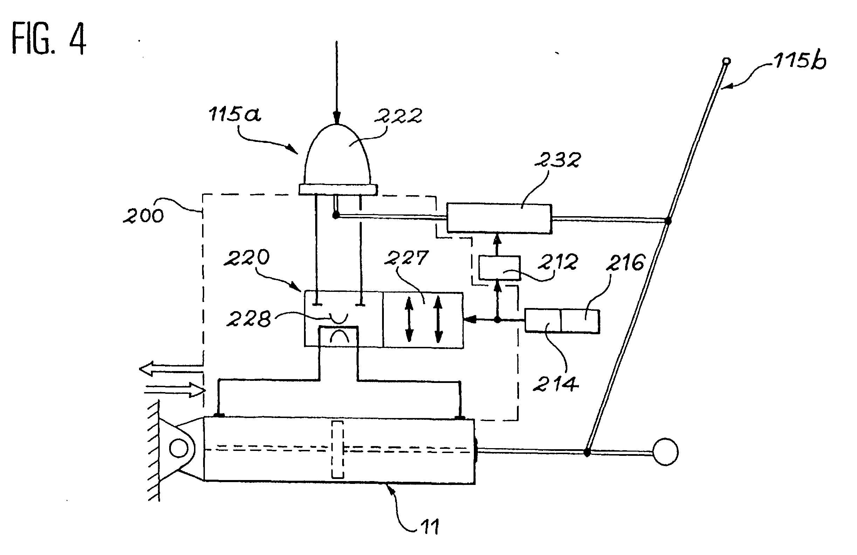

La figure 4 montre de façon schématique un autre type d'actionneur mixte utilisable dans le dispositif de l'invention.

L'actionneur comporte un tiroir de mode 220 avec seulement deux positions. Si au moins l'une des deux électrovannes 214 et 216, pilotées respectivement par les unités de calcul 152 et 150 visibles à la figure 1, sont excitées, le tiroir de mode se positionne pour mettre mutuellement en communication les chambres 210, 211 du vérin par l'intermédiaire du restricteur 228, et l'actionneur fonctionne selon le mode amorti. L'excitation de l'électrovanne 212 permet en outre de mettre l'embrayage 232 dans un état débrayé qui rend la servovalve 222 indépendante de la commande mécanique 115b.

Lorsque les électrovannes 214 et 216 sont désexcitées, le tiroir de mode 220 se positionne pour mettre les chambres du vérin 115 en communication avec la servovalve 222 à travers une portion à double passage 227 du tiroir. L'actionneur est alors en mesure de fonctionner soit en mode actif électrique, soit en mode actif mécanique.

Le mode actif électrique est activé si l'électrovanne 212 est excitée. La commande mécanique est alors débrayée et immobilisée, et l'entrée de commande électrique 115a de la servovalve est pilotée.

Lorsque l'électrovanne 212 est désexcitée, soit intentionnellement, soit à la suite de pannes électriques telles que déjà décrites, la commande mécanique est accouplée à la servovalve, par l'intermédiaire de l'embrayage 232 et la servovalve délivre aux chambres du vérin un débit fonction de l'entrée de commande mécanique 115b. Ceci correspond donc au mode actif mécanique.

Dans l'application envisagée, et par construction, on ne prévoit pas de piloter la servovalve simultanément par l'entrée de commande mécanique et par l'entrée de commande électrique.

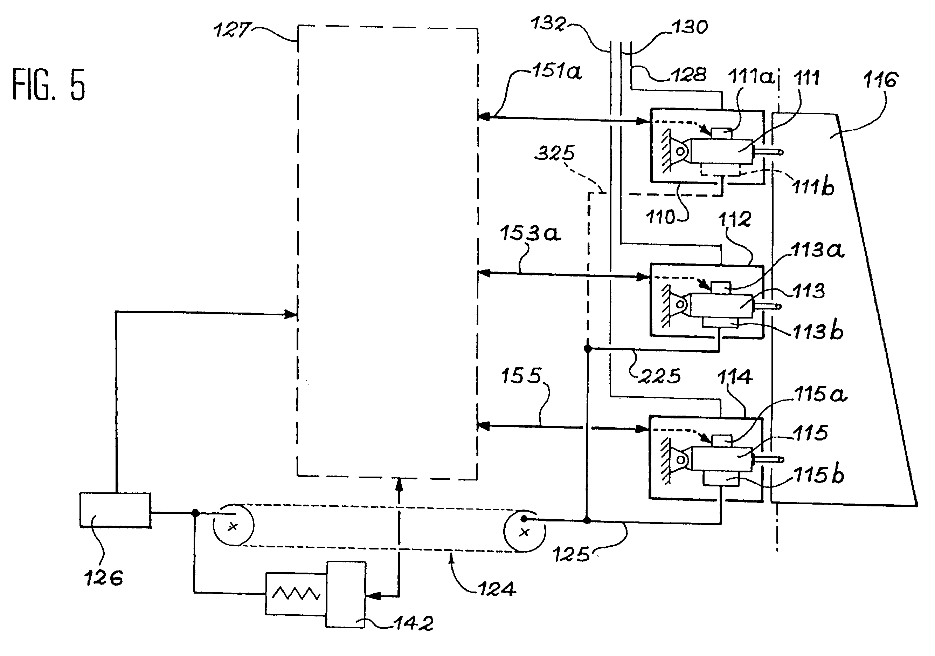

La figure 5 montre une variante de mise en oeuvre de l'invention selon laquelle le dispositif de commande est équipé de deux ou de trois actionneurs mixtes.

Les actionneurs 110, 112 et 114 comportent dans l'exemple illustré, respectivement des entrées de commande électriques 111a, 113a et 115a, reliées à l'unité de pilotage électrique 127, et des entrées de commande mécaniques (111b), 113b, 115b reliées à la timonerie 124 par l'intermédiaire de transmissions (325), 225 et 125 respectivement.

Le caractère redondant de cette configuration apporte une sécurité de fonctionnement supplémentaire.

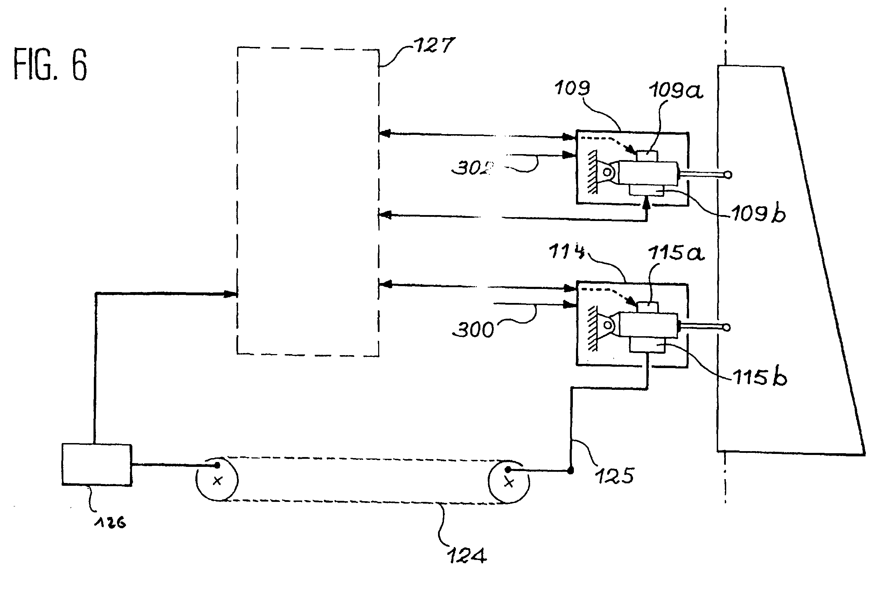

La figure 6 montre une autre variante de mise en oeuvre de l'invention dans laquelle seuls deux actionneurs sont utilisés.

Le dispositif comporte un actionneur mixte 114 avec une entrée de commande électrique 115a reliée à un système de pilotage électrique 127, et une entrée de commande mécanique 115b reliée aux organes de pilotage 126 par une timonerie 124 et une transmission 125. L'actionneur 114 est alimenté par un circuit hydraulique 300.

Le deuxième actionneur porte la référence 109. Il s'agit d'un actionneur dit "EBHA" (Electrical Back-Up Hydraulic Actuator) avec deux entrées électriques 109a et 109b reliées également au système de pilotage 127.

L'entrée électrique 109a permet d'envoyer des ordres de commande à une servovalve (non représentée) du type déjà décrit et alimentée par un circuit hydraulique 302. La deuxième entrée électrique 109b permet d'envoyer des ordres de commande à un système de génération hydraulique intégré et autonome pour manoeuvrer la gouverne.

Cette réalisation permet de faire l'économie d'un actionneur et éventuellement d'un circuit hydraulique, par rapport à la réalisation de la figure 1, par exemple. Un gain en masse important peut ainsi être obtenu.

## Revendications

1. Dispositif de commande d'une gouverne d'inclinaison ou de profondeur (116) d'un aéronef, comportant au moins deux actionneurs (110, 112, 114; 109), chaque actionneur ayant chacun au moins une entrée de commande électrique (111a, 113a, 115a; 109a, 109b), et un système de pilotage électrique (127) des actionneurs (110, 112, 114; 109) apte à occuper un premier état, dit de vol normal, dans lequel au moins l'un des actionneurs (110,112,114;109) est piloté pour actionner la gouverne, **caractérisé en ce qu'**au moins l'un des actionneurs (114), dit actionneur mixte, comporte en outre une entrée de commande mécanique (115b), et **en ce que** le système de pilotage électrique (127) des actionneurs (110, 112, 114; 109) est apte à occuper un deuxième état, dit de manoeuvre, dans lequel au moins deux des actionneurs sont pilotés pour actionner simultanément la gouverne (116), et un troisième état, dit de panne de pilotage électrique, dans lequel, l'actionneur mixte (114) est piloté à partir de l'entrée de commande mécanique (115b), pour actionner la gouverne.

2. Dispositif selon la revendication 1, **caractérisé en ce que** le système de pilotage électrique (127) des actionneurs (110, 112, 114; 109) comprend une unité de calcul (150, 152, 154) associée respectivement à chaque actionneur (110, 112, 114).

3. Dispositif selon la revendication 2, **caractérisé en ce que** les actionneurs à entrée électrique (110, 112, 114) comportent respectivement un vérin hydraulique (111, 113, 115) avec deux chambres (210, 211), une servovalve (222) reliée à un circuit hydraulique (128, 130, 132) pour délivrer aux chambres un débit de fluide hydraulique fonction d'un ordre électrique en provenance de l'unité de calcul associée à l'actionneur.

4. Dispositif selon la revendication 3, **caractérisé en ce qu'**il comporte trois actionneurs (110,112,114) à entrée électrique dont au moins un actionneur mixte (114).

5. Dispositif selon la revendication 4, **caractérisé en ce que** l'actionneur mixte (114) comporte une première électrovanne (212) pilotée par l'unité de calcul (154) qui y est respectivement associée, la première électrovanne (212) étant apte à occuper un état excité correspondant à un mode de fonctionnement dit "actif électrique" dans lequel les chambres (210, 211) du vérin (115) sont mises en communication avec la servovalve (222), et un état désexcité, l'actionneur mixte (114) comportant également une deuxième et une troisième électrovannes (214, 216) pilotées respectivement par les unités de calcul (152, 150) associées aux deux autres actionneurs (110,112) du dispositif, et aptes à occuper, chacune, alternativement un état excité et un état désexcité, les chambres (210, 211) du vérin (115) de l'actionneur mixte (114) étant mises en communication entre elles dans un mode de fonctionnement dit "amorti" du vérin (115) lorsque la première électrovanne (212) occupe un état désexcité et qu'au moins une des deuxième et troisième électrovannes (214, 216) occupe un état excité, et les chambres (210, 211) du vérin (115) de l'actionneur mixte (114) étant mises en communication avec un distributeur (230) relié à l'entrée mécanique (115b) de l'actionneur (114) dans un mode de fonctionnement dit "actif mécanique" lorsque les première (212), deuxième (214) et troisième (216) électrovannes occupent un état désexcité.

6. Dispositif selon la revendication 4, **caractérisé en ce que** l'actionneur mixte (114) comporte une première, une deuxième et une troisième électrovannes (212, 214, 216) pilotées respectivement par une unité de calcul (154) associée au dit actionneur mixte (114) et par des unités de calcul (152, 150) associées aux deux autres actionneurs (110,112) du dispositif, et aptes à occuper chacune alternativement un état excité et un état désexcité, l'actionneur (114) fonctionnant selon un mode dit "amorti", dans lequel les chambres (210, 211) du vérin (115) sont mises en communication mutuelle, lorsqu'au moins l'une des deuxième et troisième électrovannes (214, 216) est dans un état excité ; l'actionneur fonctionnant selon un mode dit "actif électrique" dans lequel les chambres (210, 213) du vérin (115) sont mises en communication avec la servovalve (222), et dans lequel l'actionneur (114) est piloté par l'intermédiaire de l'entrée de commande électrique (115a) lorsque la première électrovanne (212) est excitée et que les deuxième et troisième électrovannes (214, 216) sont désexcitées et l'actionneur (114) fonctionnant selon un mode dit "actif mécanique" dans lequel les chambres (210, 211) du vérin (115) sont mises en communication avec la servovalve (222) et dans lequel l'actionneur (114) est piloté par l'intermédiaire de l'entrée de commande mécanique (115b), lorsque les première, deuxième et troisième électrovannes (212, 214, 216) sont dans un état désexcité.

7. Dispositif selon l'une des revendications 1 à 3, **caractérisé en ce qu'**il comporte au moins un actionneur (109) avec deux entrées de commande électrique (109a, 109b), ledit actionneur (109) presentant une servovalve pilotée par la première entrée de commande électrique (109a) et un système de génération hydraulique intégré piloté par la deuxième entrée de commande électrique (109b).

8. Dispositif selon la revendication 7, **caractérisé en ce qu'**il comporte un actionneur mixte (114) et un actionneur (109) à deux entrées électriques, chaque actionneur étant alimenté par un circuit hydraulique (300, 302) qui lui est propre.

9. Dispositif selon la revendication 1, **caractérisé en ce qu'**il comporte un premier actionneur (110) à entrée électrique (111a) reliée à un premier circuit hydraulique (128), pour actionner la gouverne en cas de fonctionnement normal, un deuxième actionneur (114) à entrée électrique (115a) reliée à un deuxième circuit hydraulique (132), et un troisième actionneur à entrée électrique de type hydrostatique avec un système de génération hydraulique intégré, au moins l'un des premier et deuxième actionneurs (110, 114) étant des actionneurs mixtes comportant en outre une entrée de commande mécanique.

10. Dispositif selon la revendication 1, comprenant un premier actionneur avec une entrée de commande électrique et un deuxième actionneur mixtes (114) avec une entrée de commande électrique (115a) et une entrée de commande mécanique (115b).

11. Dispositif selon la revendication 10, dans lequel le premier actionneur à entrée de commande électrique est un actionneur hydrostatique à alimentation électrique.

12. Dispositif selon la revendication 10, dans lequel le premier actionneur à entrée de commande électrique est un actionneur à double alimentation électrique/hydraulique.

13. Dispositif selon la revendication 1 comprenant deux actionneurs (110, 112) avec une entrée de commande électrique (111a, 113a) et un actionneur mixte (114) avec une entrée de commande électrique (115a) et une entrée de commande mécanique (115b).

14. Procédé de pilotage d'un dispositif de commande d'une gouverne d'inclinaison ou de profondeur (116) d'un aéronef, le dispositif comprenant au moins deux actionneurs (110, 112, 114) à entrée de commande électrique (111a, 113a, 115a) dont au moins l'un, dit actionneur mixte (114), comporte en outre une entrée de commande mécanique (115b), et un système de pilotage électrique (127) des actionneurs (110, 112, 114), selon lequel, pour actionner la gouverne :
- on pilote électriquement au moins un des actionneurs (110, 112, 114) dans un état dit de vol normal,
- on pilote électriquement et simultanément au moins deux actionneurs (110, 112, 114) dans un état dit de manoeuvre, et
- on pilote mécaniquement l'actionneur mixte (114) dans un état de panne du système de pilotage électrique (127) des actionneurs.

## Patentansprüche

1. Vorrichtung zur Steuerung / Regelung eines Neigungs- oder Höhenruders (116) eines Luftfahrzeugs, umfassend wenigstens zwei Betätigungselemente (110, 112, 114; 109), wobei jedes Betätigungselement jeweils wenigstens einen elektrischen Steuer/Regeleingang (111a, 113a, 115a; 109a, 109b) aufweist, sowie ein System zur elektrischen Steuerung (127) der Betätigungselemente (110, 112, 114; 109), das dazu ausgelegt ist, einen ersten sogenannten Normalflugzustand einzunehmen, in dem wenigstens eines der Betätigungselemente (110, 112, 114; 109) derart gesteuert wird, daß es das Ruder betätigt, **dadurch gekennzeichnet, daß** wenigstens eines der Betätigungselemente (114), genannt Mischbetätigungselement, ferner einen mechanischen Steuer/Regeleingang (115b) umfaßt, und daß das System zur elektrischen Steuerung (127) der Betätigungselemente (110, 112, 114; 109) dazu ausgelegt ist, einen zweiten sogenannten Manövrierzustand einzunehmen, in welchem wenigstens zwei der Betätigungselemente derart gesteuert werden, daß sie gleichzeitig das Ruder (116) betätigen, sowie einen dritten sogenannten Elektrosteuerungspannenzustand, in dem das Mischbetätigungselement (114) ausgehend vom mechanischen Steuer/Regeleingang (115b) derart gesteuert wird, daß es das Ruder betätigt.

2. Vorrichtung nach Anspruch 1, **dadurch gekennzeichnet, daß** das System zur elektrischen Steuerung (127) der Betätigungselemente (110, 112, 114; 109) eine Recheneinheit (150, 152, 154) umfaßt, die jeweils jedem Betätigungselemente (110, 112, 114) zugeordnet ist.

3. Vorrichtung nach Anspruch 2, **dadurch gekennzeichnet, daß** die Betätigungselemente mit elektrischem Eingang (110, 112, 114) jeweils einen Hydraulikzylinder (111, 113, 115) mit zwei Kammern (210, 211) umfassen, wobei ein Servoventil (222) mit einem Hydraulikkreislauf (128, 130, 132) verbunden ist, um den Kammern eine Hydraulikfluidrate als Funktion eines elektrischen Befehls von der dem Betätigungselement zugeordneten Recheneinheit zu liefern.

4. Vorrichtung nach Anspruch 3, **dadurch gekennzeichnet, daß** sie drei Betätigungselemente (110, 112, 114) mit elektrischem Eingang umfaßt, darunter wenigstens ein Mischbetätigungselement (114).

5. Vorrichtung nach Anspruch 4, **dadurch gekennzeichnet, daß** das Mischbetätigungselement (114) ein erstes Elektroventil (212) umfaßt, welches von der Recheneinheit (154) gesteuert wird, die ihm jeweils zugeordnet ist, wobei das erste Elektroventil (212) dazu ausgelegt ist, einen erregten Zustand entsprechend einem sogenannten "elektrisch aktiven" Funktionsmodus einzunehmen, in dem die Kammern (210, 211) des Zylinders (115) in Verbindung mit dem Servoventil (222) gesetzt sind, sowie einen abgeregten Zustand, wobei das Mischbetätigungselement (114) ferner ein zweites und ein drittes Elektroventil (214, 216) umfaßt, die jeweils durch die den zwei anderen Betätigungselementen (110, 112) der Vorrichtung zugeordneten Recheneinheiten (152, 150) gesteuert werden und dazu ausgelegt sind, jeweils alternativ einen erregten Zustand und einen abgeregten Zustand einzunehmen, wobei die Kammern (210, 211) des Zylinders (115) des Mischbetätigungselements (114) in einem sogenannten "gedämpften" Funktionsmodus des Zylinders (115) in Verbindung miteinander gesetzt sind, wenn das erste Elektroventil (212) einen abgeregten Zustand einnimmt, und das zweite und/oder das dritte Elektroventil (214, 216) einen erregten Zustand einnimmt, und wobei die Kammern (210, 211) des Zylinders (115) des Mischbetätigungselements (114) in einem sogenannten "mechanisch aktiven" Funktionsmodus in Verbindung mit einem Verteiler (230) gesetzt sind, der mit dem mechanischen Eingang (115b) des Betätigungselements (114) verbunden ist, wenn das erste (212), das zweite (214) und das dritte (216) Elektroventil einen abgeregten Zustand einnehmen.

6. Vorrichtung nach Anspruch 4, **dadurch gekennzeichnet, daß** das Mischbetätigungselement (114) ein erstes, ein zweites und ein drittes Elektroventil (212, 214, 216) umfaßt, die gesteuert werden durch eine Recheneinheit (154), die dem Mischbetätigungselement (114) zugewiesen ist, bzw. durch Recheneinheiten (152, 150), die den zwei anderen Betätigungselementen (110, 112) der Vorrichtung zugeordnet sind, und die dazu ausgelegt sind, jeweils alternativ einen erregten Zustand und einen abgeregten Zustand einzunehmen, wobei das Betätigungselement (114) gemäß einem sogenannten "gedämpften" Modus arbeitet, in dem die Kammern (210, 211) des Zylinders (115) gegenseitig in Verbindung gesetzt sind, wenn das zweite und/oder das dritte Elektroventil (214, 216) in einem erregten Zustand ist, wobei das Betätigungselement gemäß einem sogenannten "elektrisch aktiven" Modus arbeitet, in dem die Kammern (210, 211) des Zylinders (115) in Verbindung mit dem Servoventil (222) gesetzt sind, und in dem das Betätigungselement (114) mittels des elektrischen Steuer/Regeleingangs (115a) gesteuert wird, wenn das erste Elektroventil (212) erregt ist und wenn das zweite und das dritte Elektroventil (214, 216) abgeregt sind, und wobei das Betätigungselement (114) gemäß einem sogenannten "mechanisch aktiven" Modus arbeitet, in dem die Kammern (210, 211) des Zylinders (115) in Verbindung mit dem Servoventil (222) gesetzt sind, und in dem das Betätigungselement (114) mittels des mechanischen Steuer/Regeleingangs (115b) gesteuert wird, wenn das erste, das zweite und das dritte Elektroventil (212, 214, 216) in einem abgeregten Zustand sind.

7. Vorrichtung nach einem der Ansprüche 1 bis 3, **dadurch gekennzeichnet, daß** sie wenigstens ein Betätigungselement (109) mit zwei elektrischen Steuer/Regeleingängen (109a, 109b) umfaßt, wobei das Betätigungselement (109) ein Servoventil aufweist, welches vom ersten elektrischen Steuer/Regeleingang (109a) gesteuert wird, sowie ein integriertes Hydraulikerzeugungssystem, welches durch den zweiten elektrischen Steuer/Regeleingang (109b) gesteuert wird.

8. Vorrichtung nach Anspruch 7, **dadurch gekennzeichnet, daß** sie ein Mischbetätigungselement (114) und ein Betätigungselement (109) mit zwei elektrischen Eingängen umfaßt, wobei jedes Betätigungselement durch einen ihm eigenen Hydraulikkreislauf (300, 302) versorgt wird.

9. Vorrichtung nach Anspruch 1, **dadurch gekennzeichnet, daß** sie ein erstes Betätigungselement (110) mit elektrischem Eingang (111a) umfaßt, der mit einem ersten Hydraulikkreislauf (128) verbunden ist, um das Ruder im Fall der Normalfunktion zu betätigen, ein zweites Betätigungselement (114) mit elektrischem Eingang (115a), der mit einem zweiten Hydraulikkreislauf (132) verbunden ist, sowie ein drittes Betätigungselement mit elektrischem Eingang vom Hydrostatiktyp mit einem integrierten Hydraulikerzeugungssystem, wobei das erste und/oder das zweite Betätigungselement (110, 114) ein Mischbetätigungselement ist/sind, das/die ferner einen mechanischen Steuer/Regeleingang umfaßt/umfassen.

10. Vorrichtung nach Anspruch 1, umfassend ein erstes Betätigungselement mit einem elektrischen Steuer/Regeleingang und ein zweites Mischbetätigungselement (114) mit einem elektrischen Steuer/Regeleingang (115a) und einem mechanischen Steuer/Regeleingang (115b).

11. Vorrichtung nach Anspruch 10, bei der das erste Betätigungselement mit elektrischem Steuer/Regeleingang ein hydrostatisches Betätigungselement mit elektrischer Versorgung ist.

12. Vorrichtung nach Anspruch 10, bei der das erste Betätigungselement mit elektrischem Steuer/Regeleingang ein Betätigungselement mit elektrischer/hydraulischer Doppelversorgung ist.

13. Vorrichtung nach Anspruch 1, umfassend zwei Betätigungselemente (110, 112) mit einem elektrischen Steuer/Regeleingang (111a, 113a) sowie ein Mischbetätigungselement (114) mit einem elektrischen Steuer/Regeleingang (115a) und einem mechanischen Steuer/Regeleingang (115b).

14. Verfahren zur Steuerung einer Vorrichtung zur Steuerung/Regelung eines Neigungs- oder Höhenruders (116) eines Luftfahrzeugs, wobei die Vorrichtung wenigstens zwei Betätigungselemente (110, 112, 114) mit elektrischem Steuer/Regeleingang (111a, 113a, 115a) umfaßt, von denen wenigstens eines, genannt Mischbetätigungselement (114), ferner einen mechanischen Steuer/Regeleingang (115b) umfaßt, sowie ein System zur elektrischen Steuerung (127) der Betätigungselemente (110, 112, 114), gemäß dem man zum Betätigen des Ruders:
- elektrisch wenigstens eines der Betätigungselemente (110, 112, 114) in einem sogenannten Normalflugzustand steuert,
- elektrisch und gleichzeitig wenigstens zwei Betätigungselemente (110, 112, 114) in einem sogenannten Manövrierzustand steuert, und
- mechanisch das Mischbetätigungselement (114) in einem Pannenzustand des Systems zur elektrischen Steuerung (127) der Betätigungselemente steuert.

## Claims

1. Device for controlling a roll or pitch control surface (116) of an aircraft comprising at least two actuators (110, 112, 114, 109), each actuator having at least one electrical control input (111a, 113a, 115a, 104a, 109b), and an electrical control system (127) for the actuators (110, 112, 114, 109) capable of being in a first or "normal flight" state, in which at least one of the actuators (110, 112, 114, 109) is controlled to actuate the control surface, **characterized in that** at least one of the actuators (114), called the hybrid actuator, also comprises a mechanical control input (115b), and **in that** the electrical control system (127) of the actuators (110, 112, 114, 109) may be in a second state or the "manoeuvre" state in which at least two of the actuators are controlled to simultaneously actuate the control surface (116), and a third state or the "electrical control failure" state in which the hybrid actuator (114) is controlled from the mechanical control input (115b) to actuate the control surface.

2. Device according to claim 1, **characterized in that** the electrical control system (127) of the actuators (110, 112, 114, 109) comprises a calculation unit (150, 152, 154) associated with each actuator (110, 112, 114) respectively.

3. Device according to claim 2, **characterized in that** the actuators with electrical inputs (110, 112, 114) comprise hydraulic jacks (111, 113, 115) respectively with two chambers (210, 211), a servovalve (222) connected to a hydraulic circuit (128, 130, 132) to output a hydraulic fluid flow to the chambers that depends on an electrical order from the calculation unit associated with the actuator.

4. Device according to claim 3, **characterized in that** it comprises three actuators (110, 112, 114) with electrical inputs, including at least one hybrid actuator (114).

5. Device according to claim 4, **characterized in that** the hybrid actuator (114) comprises a first solenoid valve (212) controlled by the calculation unit (154) associated with it, the first solenoid valve (212) being capable of occupying an excited state corresponding to an "electric active" operating mode in which the jack (115) chambers (210, 211) are put into communication with the servovalve (222), a disexcited state, the hybrid actuator (114) also comprising second and third solenoid valves (214, 216) controlled by the calculation units (152, 150) associated with the other two actuators (110, 112) in the device respectively, and capable of alternately being in an excited state and a disexcited state, the chambers (210, 211) of the jack (115) of the hybrid actuator (114) being put into communication with each other in a "damped" operating mode of the jack (115) when the first solenoid valve (212) is in a disexcited state and at least one of the second and third solenoid valves (214, 216) is in an excited state, and the chambers (210, 211) of the jack (115) of the hybrid actuator (114) are put into communication with a distributor (230) connected to the mechanical input (115b) of the actuator (114) in a "mechanical active" operating mode, when the first (212), second (214) and third (216) solenoid valves are in a disexcited state.

6. Device according to claim 4, **characterized in that** the hybrid actuator (114) comprises first, second and third solenoid valves (212, 214, 216) controlled by a calculation unit (154) associated with the said hybrid actuator (114), and by calculation units (152, 150) associated with the other two actuators (110, 112) in the device, each capable of alternately being in an excited state and a disexcited state, the actuator (114) operating in a "damped" mode, in which the chambers (210, 211) of the jack (115) are put into mutual communication when at least one of the second and third solenoid valves (214, 216) is in an excited state; the actuator operating according to an "electric active" mode in which the chambers (210, 211) of the jack (115) are put into communication with the servovalve (222), and in which the actuator (114) is controlled through the electrical control input (115a), when the first solenoid valve (212) is excited and the second and third solenoid valves (214, 216) are disexcited, and the actuator (114) operating according to a "mechanical active" mode in which the chambers (210, 211) of the jack (115) are put into communication with the servovalve (222) and in which the actuator (114) is controlled through the mechanical control input (115b), when the first, second and third solenoid valves (212, 214, 216) are in a disexcited state.

7. Device according to one of claims 1 to 3, **characterized in that** it comprises at least one actuator (109) with two electrical control inputs (109a, 109b), the said actuator (109) comprising a servovalve controlled by the first electrical control input (109a) and an integrated hydraulic generation system controlled by the second electrical control input (109b).

8. Device according to claim 7, **characterized in that** it comprises a hybrid actuator (114) and an actuator (109) with two electrical inputs, each actuator being supplied through a hydraulic circuit (300, 302) specific for it.

9. Device according to claim 1, **characterized in that** it comprises a first actuator (110) with an electrical input (111a) connected to a first hydraulic circuit (128) to actuate the control surface during normal operation, a second actuator (114) with an electrical input (115a) connected to a second hydraulic circuit (132), and a third actuator with a hydrostatic type electrical input with a built-in hydraulic generation system, at least one of the first and second actuators (110, 114) being hybrid actuators also comprising a mechanical control input.

10. Device according to claim 1, comprising a first actuator with an electrical control input and a second hybrid actuator (114) with an electrical control input (115a) and a mechanical control input (115b).

11. Device according to claim 10, in which the first actuator with an electrical control input is a hydrostatic actuator with an electrical power supply.

12. Device according to claim 10, in which the first actuator with an electrical control input is an actuator with a double electrical/hydraulic power supply.

13. Device according to claim 1, comprising two actuators (110, 112) with an electrical control input (111a, 113a) and a hybrid actuator (114) with an electrical control input (115a) and a mechanical control output (115b).

14. Process for controlling a control device for an aircraft roll or pitch control surface (116), the device comprising at least two actuators (110, 112, 114) with an electrical control input (111a, 113a, 115a), at least one of which, called the hybrid actuator (114), also comprises a mechanical control input (115b) and an electrical control system (127) for the actuators (110, 112, 114), by which the control surface is actuated as follows:
- at least one of the actuators (110, 112, 114) is controlled electrically in a "normal flight" state,
- at least two actuators are controlled electrically and simultaneously in a "manoeuvre" state, and
- the hybrid actuator (114) is controlled mechanically when the actuator electrical control system (127) is in a "failure" state.
